# FASCICULE DE BREVET EUROPEEN

(11) **EP 3 454 591 B1**
(45) Date de publication et mention de la délivrance du brevet: **18.03.2020**
(21) Numéro de dépôt: 18193876.2
(22) Date de dépôt: 11.09.2018
(51) Int. Cl.: H04W 24/08, H04W 84/00, B61L 15/00, B61L 27/00

(54) **PROCÉDÉ DE TRANSMISSION DE DONNÉES D'UN SYTÈME DE COMMUNICATION FERROVIAIRE, PRODUIT PROGRAMME D'ORDINATEUR, ÉQUIPEMENT DE COMMUNICATION ET SYSTÈME DE COMMUNICATION FERROVIAIRE ASSOCIÉS**
DATENÜBERTRAGUNGSVERFAHREN EINES SCHIENENKOMMUNIKATIONSSYSTEMS, ENTSPRECHENDES COMPUTERPROGRAMM, ENTSPRECHENDE KOMMUNIKATIONSAUSRÜSTUNG UND ENTSPRECHENDES SCHIENENKOMMUNIKATIONSSYSTEM
METHOD FOR TRANSMITTING DATA FROM A RAILWAY COMMUNICATION SYSTEM, ASSOCIATED COMPUTER PROGRAM PRODUCT, COMMUNICATION EQUIPMENT AND RAILWAY COMMUNICATION SYSTEM

(30) Priorité: 11.09.2017 FR 1758366
(43) Date de publication de la demande: 13.03.2019
(73) Titulaire: ALSTOM Transport Technologies, 93400 Saint-Ouen (FR)
(72) Inventeur: SIMOENS, Sébastien, 69008 Lyon (FR); COMTE, Renaud, 38080 Saint Alban De Roche (FR); WARO, Philippe, 69210 Saint Pierre La Palud (FR); MOYART, Didier, 69006 Lyon (FR)
(74) Mandataire: Lavoix

(56) Documents cités:
- EP-A1- 2 836 033
- EP-A1- 2 943 001
- US-A1- 2017 149 603

## Description

La présente invention concerne un procédé de transmission et un procédé d'analyse de données d'un système de communication ferroviaire, les dispositifs respectivement associés à savoir un équipement de communication et une unité d'analyse, les produits programme d'ordinateur également respectivement associés, et le système de communication ferroviaire respectivement associé.

Les systèmes de communication ferroviaire comprennent classiquement tel que divulgué dans le document EP 2 943 001 A1, d'une part un ensemble d'équipements de communication statiques, également appelés points d'accès, disposés sur les voies ferroviaires d'un réseau ferroviaire et d'autre part, un ensemble d'équipements de communication mobiles localisés sur des véhicules ferroviaires mobiles.

Ces équipements de communication communiquent entre eux notamment par liaison radio afin de permettre en permanence, et en tout point du réseau ferroviaire, un échange de données entre les véhicules ferroviaires mobiles et les points d'accès du réseau reliés, par liaison radio ou filaires, à une unité de gestion du réseau ferroviaire.

Classiquement, un point d'accès est apte à détecter une panne (i.e. l'absence de fonctionnement) survenant au sein d'un point d'accès voisin.

Toutefois, selon cette méthode de l'état de la technique la réparation ou le remplacement du point d'accès qui ne communique plus n'est mis en oeuvre qu'une fois que l'interruption de couverture radio est détectée. En outre, cette méthode de l'état de la technique ne permet pas de détecter une baisse de fonctionnement préalable à une panne au sein d'un point d'accès statique, mais également au sein d'un équipement de communication mobile.

Le but de l'invention est de mettre en œuvre une maintenance efficace au niveau des équipements de communication statiques et également au niveau des équipements de communication mobiles qui constituent le système de communication ferroviaire, afin d'éviter, ou à tout le moins de minimiser l'interruption de la couverture radio d'un système de communication ferroviaire au regard des systèmes de maintenance existants.

A cet effet, l'invention propose un procédé de transmission de données selon la revendication 1.

Suivant d'autres aspects avantageux de l'invention, le procédé de transmission de données comprend une ou plusieurs des caractéristiques suivantes, prises isolément ou suivant toute combinaison techniquement possible :
- l'étape de détermination comprend les étapes suivantes :
   - mémorisation des niveaux de puissance du signal émis tant que l'équipement de communication de mesure est localisé à portée d'émission de l'équipement de communication mesuré,
   - détermination du maximum du niveau de puissance du signal émis mémorisé,
- la mise en œuvre de la formation d'une donnée mobile est temporisée, l'étape de détermination délivrant au moins deux niveaux de puissance intermédiaires du signal émis, le niveau de puissance du signal émis utilisé pour la formation de la donnée mobile étant égal à une moyenne de ces au moins deux niveaux de puissance intermédiaires.

L'invention a également pour objet un produit programme d'ordinateur comportant des instructions logicielles qui, lorsqu'elles sont mises en œuvre par un ordinateur, mettent en œuvre le procédé de transmission de données tel que défini ci-dessus.

L'invention a également pour objet un équipement de communication de mesure selon la revendication 5.

L'invention a également pour objet un procédé d'analyse de données selon la revendication 6.

Suivant un aspect avantageux de l'invention, le procédé d'analyse de données comprend une étape d'initialisation du niveau de puissance de signal de chaque donnée de référence à un niveau optimal mise en œuvre préalablement à ladite réception.

L'invention a également pour objet un produit programme d'ordinateur comportant des instructions logicielles qui, lorsqu'elles sont mises en œuvre par un ordinateur, mettent en œuvre le procédé d'analyse de données tel que défini ci-dessus.

L'invention a également pour objet un système de communication ferroviaire selon la revendication 9.

L'invention sera mieux comprise à la lecture de la description qui va suivre, donnée uniquement à titre d'exemple, et faite en se référant aux dessins annexés, sur lesquels :
- la figure 1 est une représentation schématique d'un système de communication ferroviaire dans lequel les procédés de transmission et d'analyse de données selon l'invention sont mis en œuvre,
- la figure 2 est un organigramme illustrant la mise en œuvre d'un procédé de transmission de données selon l'invention,
- la figure 3 est un organigramme illustrant les étapes mises en œuvre par une unité d'analyse de données selon l'invention.

Par la suite, l'expression « donnée mobile » exprime le fait que la donnée est déterminée lorsque l'équipement de communication de mesure ou l'équipement de communication mesuré est mobile, tandis que l'expression « donnée statique » exprime le fait que la donnée est déterminée lorsque l'équipement de communication de mesure et l'équipement de communication mesuré sont tous les deux statiques. De telles données mobile ou statique sont par exemple des données utilisées pour une application de supervision d'un système de communication ferroviaire, ou pour tout autre type d'application nécessitant de telles données.

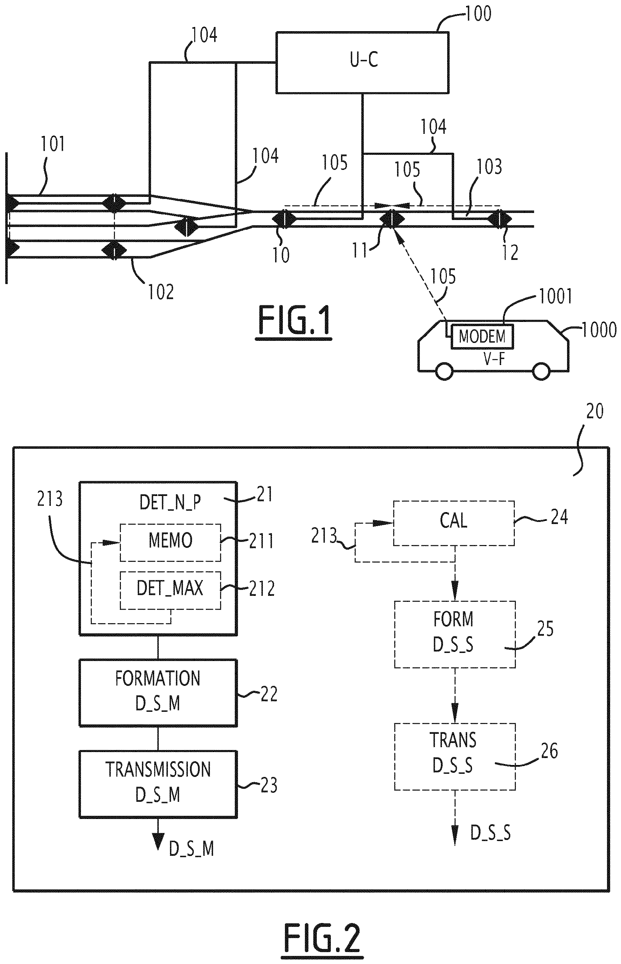

La figure 1 illustre un système de communication ferroviaire comprenant une pluralité d'équipements de communication statiques correspondant à des points d'accès 10, 11, 12 au réseau de communication ferroviaire. Ces points d'accès sont immobiles et disposés sur, ou à proximité des voies ferroviaires 101, 102, 103.

Chaque point d'accès 10, 11, 12 est relié par une liaison de communication radio ou filaire d'un réseau de communication 104 à une unité d'analyse 100 apte à contrôler et gérer la couverture radio du système de communication ferroviaire.

Par ailleurs, le système de communication ferroviaire comprend des équipements de communication mobiles 1001, localisés chacun sur un véhicule ferroviaire mobile 1000.

De tels équipements de communication mobiles comprennent par exemple des modem (i.e. modulateur-démodulateur) radio aptes à émettre un signal de données à destination d'un point d'accès statique selon une liaison de communication 105, et recevoir un signal de données depuis un tel point d'accès statique

Chaque équipement de communication 10, 11, 12, 1001 du système de communication illustré selon la figure 1 est identifié par un identifiant qui lui est propre, et comprend une unité de traitement d'informations, comportant une mémoire dans laquelle est stocké cet identifiant, et apte à mettre en œuvre des instructions logicielles d'un procédé de transmission de données d'un produit programme d'ordinateur. En variante, l'unité de traitement d'informations d'un équipement de communication comprend un ou plusieurs composants logiques programmables, tels qu'un ou plusieurs FPGA (de l'anglais *Field Programmable Gate Array)* ou encore d'un ou plusieurs circuits intégrés dédié, tels qu'un ou plusieurs ASIC (de l'anglais *Application Specific Integrated Circuit).*

Chaque équipement de communication 10, 11, 12, 1001, comprend également des moyens de transmission et de réception d'un signal de données, notamment au moyen d'une ou plusieurs antennes (non représentée(s)).

Par ailleurs, chaque équipement de communication, qu'il soit mobile ou statique, comprend des moyens de détermination d'un niveau de puissance du signal émis par un autre équipement de communication, mobile ou statique, à portée d'émission. Ces moyens de détermination sont connectés aux moyens de réception précités.

En d'autres termes, ces moyens de détermination sont propres à permettre à un équipement de communication de mesure de collecter et de quantifier au fil du temps la capacité d'émission d'un autre équipement de communication voisin mesuré. Ils sont propres notamment par exemple à déterminer le niveau de puissance RSSI (de l'anglais *Received Signal Strength Indication*) du signal émis par l'équipement de communication mesuré mobile 1001.

Chaque équipement de communication, qu'il soit mobile ou statique, comprend des moyens de formation d'une donnée mobile ou statique comprenant une information représentative du niveau de puissance du signal émis, l'identifiant de l'équipement de communication mesuré, et l'identifiant de l'équipement de communication de mesure. Selon une variante (non représentée), les moyens de détermination sont connectés à un compteur apte à temporiser l'activation des moyens de formation.

De tels moyens de formation sont connectés en entrée aux moyens de détermination précités et en sortie aux moyens de transmission décrits ci-après.

De tels moyens de transmission sont aptes à transmettre, via le réseau de communication 104, une donnée statique ou mobile à l'unité d'analyse de données 100, via une liaison de communication radio ou filaire.

Dans la configuration illustrée par la figure 1, l'équipement de communication statique de mesure 11 est également apte à transmettre des données statiques associées aux équipements de communication statique mesuré 10 et 12.

Ainsi, l'équipement de communication statique de mesure 11 est également apte à mettre en œuvre des étapes de procédé de transmission complémentaires pour transmettre une donnée statique.

L'unité d'analyse de données 100 comprend une unité de traitement d'informations, comportant une mémoire, et apte à mettre en œuvre des instructions logicielles d'un procédé d'analyse de données d'un produit programme d'ordinateur selon l'invention.

En variante, l'unité de traitement d'informations d'une unité d'analyse de données 100 comprend un ou plusieurs composants logiques programmables, tels qu'un ou plusieurs FPGA (de l'anglais *Field Programmable Gate Array)* ou encore d'un ou plusieurs circuits intégrés dédié, tels qu'un ou plusieurs ASIC (de l'anglais *Application Specific Integrated Circuit).*

L'unité d'analyse de données 100 comprend des moyens de réception de données mobile ou statique fournie par un équipement de communication 10, 11, 12, 1001 du système de communication ferroviaire.

Ces moyens de réception correspondent par exemple à une antenne ou plusieurs antennes de réception ou un port d'entrée d'une liaison filaire au réseau de communication 104.

Ces moyens de réception sont connectés en sortie à des moyens de détermination d'une variation du niveau de puissance du signal émis d'un équipement de communication, par comparaison à un niveau de puissance du signal émis mémorisé dans une donnée de référence comprenant le même identifiant de l'équipement de communication de mesure et le même identifiant de l'équipement de communication mesuré.

En sortie, les moyens de détermination d'une variation du niveau de puissance précités sont connectés à des moyens de génération d'une alerte activés lorsque la variation dépasse un seuil prédéterminé.

Un procédé de transmission 20 de données selon l'invention va à présent être décrit en référence à la figure 2.

Les étapes du procédé de transmission 20 de données décrites par la suite, ou au moins certaines de ces étapes, résultent de l'exécution, par l'unité de traitement d'information d'un équipement de communication décrite précédemment.

Le procédé de transmission 20 selon l'invention est appliqué dans le cas particulier où le système de communication ferroviaire comprend au moins un couple d'équipements de communication, dont un est statique (11 par exemple) et l'autre est mobile 1001.

Considérant ce couple d'équipements de communication, l'équipement de communication de mesure est, selon un premier exemple, l'équipement de communication statique 11, et l'équipement de communication mesuré est l'équipement de communication mobile 1001.

Dans une étape 21, les moyens de détermination de l'équipement de communication statique de mesure 11 déterminent, lorsque l'équipement de communication statique de mesure 11 est à portée d'émission de l'équipement de communication mesuré mobile 1001, le niveau de puissance RSSI (de l'anglais *Received Signal Strength Indication*) du signal émis par l'équipement de communication mesuré mobile 1001.

Par « portée d'émission », on couvre le fait qu'un équipement de communication récepteur est à portée d'émission de l'équipement de communication émetteur, tandis que réciproquement, un équipement de communication émetteur est à portée de réception d'un équipement de communication émetteur.

Une telle détermination 21 comprend la mémorisation 211 en continu du RSSI tant que l'équipement de communication statique de mesure 11 est à portée d'émission de l'équipement de communication mesuré mobile 1001 (i.e. pendant le déplacement de l'équipement de communication mesuré mobile 1001 à proximité de l'équipement de communication statique de mesure 11).

Une fois que l'équipement de communication statique de mesure 11 n'est plus à portée d'émission de l'équipement de communication mesuré mobile 1001, l'équipement de communication statique de mesure 11 détecte 212 le maximum du niveau de puissance du signal émis l'équipement de communication mesuré mobile 1001 pendant son passage.

Les mêmes étapes sont mises en œuvre par l'équipement de communication de mesure lorsque, selon un deuxième exemple, il est considéré à l'inverse que l'équipement de communication de mesure est l'équipement de communication mobile 1001 et l'équipement de communication mesuré est l'équipement de communication statique 11.

Une fois le niveau de puissance maximal déterminé par l'équipement de communication de mesure, une étape 22 de formation d'une donnée mobile est mise en œuvre. Une telle donnée mobile est à un triplet comprenant à la fois le niveau de puissance déterminé, et les identifiants respectifs des équipements de communication de mesure et mesuré.

L'ordre des informations constitutives du triplet est connu par l'unité d'analyse 100 ou transmis au préalable (non représenté).

Ainsi, selon un exemple, l'ordre du triplet est le suivant : RSSI maximal par exemple : -40dBm, identifiant de l'équipement de communication de mesure 11, et identifiant de l'équipement de communication mesuré 1001.

Outre le couple 11, 1001 d'équipements de communication mobile et statique précité, le système de communication ferroviaire est apte à comprendre d'autres équipements de communication statique 10, 12 ou mobile (non représenté).

Lorsque l'équipement de communication mobile 1001 et le point d'accès 10 et 12 sont à portée d'émission, le procédé précédemment décrit est mis en œuvre pour le couple d'équipements de communication mobile 1001 et statique 10, ou encore pour le couple d'équipements de communication mobile 1001 et statique 12, etc.

Par ailleurs, lorsque selon le premier exemple ci-dessus on considère que l'équipement de communication de mesure est statique 11, il est également à portée d'émission d'équipements de communication statiques voisins tels que les équipements de communication statique 10 et 12.

Dans ce cas particulier, le procédé comprend des étapes complémentaires permettant de superviser également des équipements de communication statiques. Une de ces étapes complémentaires consiste à calculer 24, de manière périodique, par exemple toutes les 25ms, une moyenne glissante du RSSI du signal émis sur une fenêtre temporelle prédéterminée par exemple de l'ordre de 100ms, via la liaison de communication 105 par l'équipement de communication statique mesuré 10 ou 12.

Une telle moyenne glissante permet notamment de prendre en compte les fluctuations de RSSI de point d'accès statiques au regard du passage de véhicules ferroviaires.

De la même manière, que pour une donnée mobile, les moyens de formation de l'équipement de communication statique de mesure 11 sont utilisés pour former 25 une donnée statique (i.e. associée à un couple d'équipement de communication statique du système).

Ainsi, par exemple, pour l'équipement de communication statique mesuré 10 le niveau de puissance (résultant de la moyenne glissante) et mesuré par l'équipement de communication statique de mesure 11, est de l'ordre de -62dBm, tandis que celui associé à l'équipement de communication statique mesuré 12 est de l'ordre de -59dBm.

Ainsi, selon cet exemple l'équipement de communication statique de mesure 11 est apte à transmettre à l'unité d'analyse de données 100 trois données de supervision, deux statiques (-62, 11, 10) et (-59, 11, 12) et une donnée mobile (-40, 11, 1001).

Selon une variante, la mise en œuvre des étapes du procédé est temporisée en fonction de la capacité d'analyse de l'unité d'analyse de données 100 et/ou en fonction de l'encombrement du réseau de communication 104.

Une telle temporisation 213 consiste à retarder, l'étape de formation 22 d'une donnée mobile, ou l'étape de formation 25 d'une donnée statique.

Selon un premier exemple de temporisation 213 mis en œuvre pour temporiser la transmission d'une donnée mobile, l'étape de détermination 21 d'un niveau de puissance est répétée plusieurs fois, par exemple pour quatre passages de l'équipement de communication mobile 1001 à portée d'émission de l'équipement de communication statique (i.e. point d'accès) 11.

Une fois ces quatre passages comptabilisés, par exemple au moyen d'un compteur, l'étape de détermination 21 obtient une moyenne des niveaux de puissance obtenus à chaque passage de l'équipement de communication mobile 1001 qui est utilisée pour la formation de la donnée mobile associée.

Selon un autre exemple de temporisation 213, sur une durée de temporisation, par exemple de l'ordre de la seconde, l'étape de calcul périodique 24 obtient pour chaque période de 25ms une moyenne glissante du niveau de puissance, soit quarante moyennes glissantes pour la période de temporisation d'une seconde. A l'expiration de la durée de temporisation, une moyenne des quarante moyennes glissantes est calculée 24 et utilisée pour la formation 25 de la donnée statique.

Une telle temporisation mise en œuvre au sein de l'équipement de communication permet donc un allégement du trafic de données collectées sur le réseau de communication 104 et une distribution du traitement entre les équipements de communication 10, 11, 12, 1001 et l'unité d'analyse de données 100.

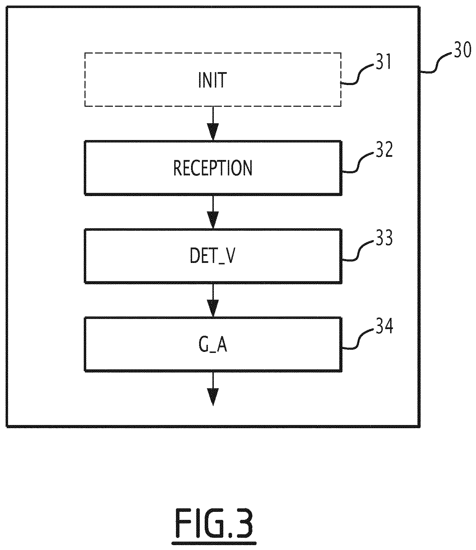

Un procédé d'analyse 30 de données selon l'invention va à présent être décrit en référence à la figure 3.

Les étapes du procédé d'analyse 30 de données décrites par la suite, ou au moins certaines de ces étapes, résultent de l'exécution, par l'unité de traitement l'unité d'analyse de données 100 décrite précédemment, d'instructions logicielle stockées dans la mémoire, ou en variante de la mise en œuvre d'un ou plusieurs composants logiques programmables, tels qu'un ou plusieurs FPGA (de l'anglais *Field Programmable Gate Array)* ou encore d'un ou plusieurs circuits intégrés dédié, tels qu'un ou plusieurs ASIC (de l'anglais *Application Specific Integrated Circuit).*

De manière réciproque au procédé de transmission 20 précédemment décrit, le procédé d'analyse 30 de données mis en œuvre par l'unité d'analyse de données 100 comprend tout d'abord une étape de réception 32 d'au moins une donnée mobile précédemment décrite.

De plus, lorsque le système de communication ferroviaire, tel qu'illustré par la figure 1, comprend en plus d'un couple d'équipements de communication statique 11 et mobile 1001, d'autres équipements de communication statiques 10 et 12, des données statiques, telles que décrites précédemment, sont également reçues à l'étape 32 par l'unité d'analyse de données 100.

Ainsi, pour chaque couple d'équipements de communication à portée d'émission l'un de l'autre, qu'ils soient statiques ou mobiles, l'unité d'analyse de données 100 reçoit en temps réel le RSSI associé à l'équipement de communication mesuré du couple considéré.

L'unité d'analyse de données 100 obtient ainsi en temps réel une image globale du système de communication en termes de RSSI associé à chaque couple (équipement de communication de mesure, équipement de communication mesuré).

Au préalable, une étape d'initialisation 31 de cette image globale est mise en œuvre par l'unité d'analyse de données 100. Cette étape d'initialisation 31 consiste à mémoriser pour chaque couple d'équipements communication une donnée de référence correspondant à un niveau optimal de puissance d'émission de l'équipement de communication mesuré du couple considéré.

Après réception 32 des données mobile, et le cas échéant statique, l'unité d'analyse de données 100 détermine 33 la variation du niveau de puissance de la donnée reçue en la comparaison à la donnée correspondante.

Par exemple, pour le couple d'équipements de communication statique 11 et mobile 1001, l'équipement de communication statique 11 étant l'équipement de mesure et l'équipement de communication mobile 1001 étant l'équipement de communication mesuré, l'unité d'analyse de données 100 reçoit 32 la donnée mobile (-40, 11, 1001).

La donnée de référence correspondante mémorisée au sein de la mémoire de l'unité de traitement d'information de l'unité d'analyse 100 est par exemple (-41, 11, 1001).

La comparaison délivre une variation de 3dB par rapport à la situation optimale. Le seuil prédéterminé d'alerte correspond par exemple à une variation supérieure à 6dB, de ce fait les moyens de génération d'alerte ne sont pas activés.

Un tel seuil est ajustable en fonction des critères de maintenance retenus pas l'opérateur du système de communication ferroviaire.

Le fait que des données mobiles et statiques sont transmises à une unité d'analyse permet, par exemple, d'obtenir une image globale en temps réel des besoins de maintenance d'un système de communication ferroviaire, y compris des équipements de communication mobile qu'il contient.

En outre, la détection en temps réel de variations de RSSI est obtenue selon l'invention, ce qui permet d'anticiper une panne et limiter l'interruption de communication associée.

## Revendications

1. Procédé de transmission (20) de données d'un système de communication ferroviaire comprenant une unité d'analyse (100) de données de supervision, et au moins un couple d'équipements de communication comprenant un équipement de communication statique (10, 11, 12), localisé sur ou à proximité d'une voie ferroviaire (101, 102, 103), l'équipement de communication statique étant un point d'accès au réseau de communication ferroviaire, et un équipement de communication mobile (1001), localisé sur un véhicule ferroviaire mobile (1000),
chaque équipement de communication (10, 11, 12, 1001) étant identifié par un identifiant et comprenant une unité de traitement d'informations,
les équipements de communication (10, 11, 12, 1001) et l'unité d'analyse (100) de données étant connectés à un réseau de communication (104),
le procédé de transmission de données étant mis en œuvre par l'unité de traitement d'informations d'un équipement de communication de mesure dudit au moins un couple d'équipements de communication, et comprenant les étapes suivantes:
- lorsque l'équipement de communication statique (11) et l'équipement de communication mobile (1001) dudit au moins un couple d'équipements de communication, sont à portée d'émission, détermination (21), par l'équipement de communication de mesure, d'un niveau de puissance du signal émis par un équipement de communication mesuré correspondant à l'autre équipement de communication, distinct de l'équipement de communication de mesure, dudit couple d'équipements de communication,
- formation (22) d'une donnée mobile comprenant le niveau de puissance du signal émis, l'identifiant de l'équipement de communication mesuré, et l'identifiant de l'équipement de communication de mesure,
- transmission (23) de la donnée mobile à l'unité d'analyse de données,
et lorsque ledit équipement de communication de mesure est statique et lorsque ledit système de communication ferroviaire comprend au moins un autre équipement de communication statique à portée d'émission de l'équipement de communication de mesure statique, le procédé de transmission de données de supervision, mis en œuvre par l'équipement de communication de mesure comprend en outre les étapes suivantes :
- calcul (24) périodique, par l'équipement de communication de mesure, d'une moyenne glissante d'un niveau de puissance du signal émis par ledit au moins un autre équipement de communication statique sur une fenêtre temporelle prédéterminée,
- formation (25) d'une donnée statique comprenant la moyenne glissante, l'identifiant dudit au moins un autre équipement de communication statique, et l'identifiant l'équipement de communication de mesure,
- transmission (26) de la donnée statique à l'unité d'analyse de données.

2. Procédé de transmission (20) de données selon la revendication 1, dans lequel, l'étape de détermination (21) comprend les étapes suivantes :
- mémorisation (211) des niveaux de puissance du signal émis tant que l'équipement de communication de mesure est localisé à portée d'émission de l'équipement de communication mesuré,
- détermination (212) du maximum du niveau de puissance du signal émis mémorisé.

3. Procédé de transmission (20) de données selon l'une quelconque des revendications 1 et 2, dans lequel la mise en œuvre de la formation (22) d'une donnée mobile est temporisée (213), l'étape de détermination (21) délivrant au moins deux niveaux de puissance intermédiaires du signal émis, le niveau de puissance du signal émis utilisé pour la formation de la donnée mobile étant égal à une moyenne (214) de ces au moins deux niveaux de puissance intermédiaires.

4. Produit programme d'ordinateur comportant des instructions logicielles qui, lorsque mis en œuvre par une unité de traitement de l'information intégrée à un équipement de communication statique ou mobile d'un système de communication ferroviaire comprenant une unité d'analyse de données de supervision, et au moins un couple d'équipements de communication comprenant un équipement de communication statique, localisé sur ou à proximité d'une voie ferroviaire, l'équipement de communication statique étant un point d'accès au réseau de communication ferroviaire, et un équipement de communication mobile, localisé sur un véhicule ferroviaire mobile,
chaque équipement de communication statique ou mobile étant identifié par un identifiant, les équipements de communication et l'unité d'analyse de données étant connectés à un réseau de communication,
ledit produit programme d'ordinateur met en œuvre le procédé de transmission de données selon l'une des revendications précédentes.

5. Equipement de communication de mesure (10, 11, 12, 1001) d'un couple d'équipements de communication comprenant un équipement de communication statique (10, 11, 12), localisé sur ou à proximité d'une voie ferroviaire, l'équipement de communication statique étant un point d'accès au réseau de communication ferroviaire, et un équipement de communication mobile (1001), localisé sur un véhicule ferroviaire mobile, chaque équipement de communication (10, 11, 12, 1001) étant identifié par un identifiant et comprenant une unité de traitement d'informations,
le couple d'équipements de communication appartenant à un système de communication ferroviaire comprenant également une unité d'analyse de données de supervision,
les équipements de communication et l'unité d'analyse de données étant connectés à un réseau de communication,
et ledit l'équipement de communication de mesure (10, 11, 12, 1001) comprend:
- des moyens de détermination d'un niveau de puissance du signal émis par un équipement de communication mesuré (10, 11, 12, 1001) correspondant à l'autre équipement de communication, distinct de l'équipement de communication de mesure, dudit couple d'équipements de communication, les moyens de détermination étant activés lorsque l'équipement de communication statique et l'équipement de communication mobile dudit couple, sont à portée d'émission,
- des moyens de formation d'une donnée mobile comprenant le niveau de puissance du signal émis, l'identifiant de l'équipement de communication mesuré, et l'identifiant de l'équipement de communication de mesure,
- des moyens de transmission de la donnée mobile à l'unité d'analyse de données, et lorsque ledit équipement de communication de mesure est statique et lorsque ledit système de communication ferroviaire comprend au moins un autre équipement de communication statique à portée d'émission de l'équipement de communication de mesure statique, l'équipement de communication de mesure comprend en outre les moyens suivants :
- des moyens de calcul périodique d'une moyenne glissante d'un niveau de puissance du signal émis par ledit au moins un autre équipement de communication statique sur une fenêtre temporelle prédéterminée,
- des moyens de formation d'une donnée statique comprenant la moyenne glissante, l'identifiant dudit au moins un autre équipement de communication statique, et l'identifiant l'équipement de communication de mesure,
- des moyens de transmission de la donnée statique à l'unité d'analyse de données.

6. Procédé d'analyse (30) de données d'un système de communication ferroviaire comprenant une unité d'analyse (100) de données de supervision, comprenant une unité de traitement d'informations, et au moins un couple d'équipements de communication comprenant un équipement de communication statique (10, 11, 12) localisé sur ou à proximité d'une voie ferroviaire, l'équipement de communication statique étant un point d'accès au réseau de communication ferroviaire, et un équipement de communication mobile (1001), localisé sur un véhicule ferroviaire mobile,
chaque équipement de communication étant identifié par un identifiant et comprenant une unité de traitement d'informations,
les équipements de communication (10, 11, 12, 1001) et l'unité d'analyse (100) de données étant connectés à un réseau de communication (104),
le procédé d'analyse (30) de données de supervision, comprenant les étapes suivantes mises en œuvre par l'unité de traitement d'informations d'un équipement de communication de mesure dudit au moins un couple d'équipements de communication:
- lorsque l'équipement de communication statique (11) et l'équipement de communication mobile (1001) dudit au moins un couple d'équipements de communication, sont à portée d'émission, détermination (21), par l'équipement de communication de mesure, d'un niveau de puissance du signal émis par un équipement de communication mesuré correspondant à l'autre équipement de communication, distinct de l'équipement de communication de mesure, dudit couple d'équipements de communication,
- formation (22) d'une donnée mobile comprenant le niveau de puissance du signal émis, l'identifiant de l'équipement de communication mesuré, et l'identifiant de l'équipement de communication de mesure,
- transmission (23) de la donnée mobile à l'unité d'analyse de données,
et lorsque ledit équipement de communication de mesure est statique et lorsque ledit système de communication ferroviaire comprend au moins un autre équipement de communication statique à portée d'émission de l'équipement de communication de mesure statique, le procédé de transmission de données de supervision, mis en œuvre par l'équipement de communication de mesure comprend en outre les étapes suivantes :
- calcul (24) périodique, par l'équipement de communication de mesure, d'une moyenne glissante d'un niveau de puissance du signal émis par ledit au moins un autre équipement de communication statique sur une fenêtre temporelle prédéterminée,
- formation (25) d'une donnée statique comprenant la moyenne glissante, l'identifiant dudit au moins un autre équipement de communication statique, et l'identifiant l'équipement de communication de mesure,
- transmission (26) de la donnée statique à l'unité d'analyse de données et les étapes suivantes mises en œuvre par l'unité de traitement d'information de l'unité d'analyse :
- réception (32) d'une donnée mobile fournie par un équipement de communication de mesure dudit au moins un couple d'équipements de communication, la donnée mobile comprenant, un identifiant dudit équipement de communication de mesure, un identifiant de l'équipement de communication mesuré correspondant à l'autre équipement de communication, distinct de l'équipement de communication de mesure, dudit couple d'équipements de communication, et un niveau de puissance du signal émis par l'équipement de communication mesuré,
- détermination (33) d'une variation du niveau de puissance du signal émis par comparaison à un niveau de puissance du signal émis mémorisé dans une donnée de référence comprenant le même identifiant de l'équipement de communication de mesure et le même identifiant de l'équipement de communication mesuré,
- génération (34) d'une alerte lorsque la variation dépasse un seuil prédéterminé.

7. Procédé d'analyse (20) de données selon la revendication 6, dans lequel le procédé comprend une étape d'initialisation (31) du niveau de puissance de signal de chaque donnée de référence à un niveau optimal mise en œuvre préalablement à ladite réception (32).

8. Produit programme d'ordinateur comportant des instructions logicielles qui, lorsque mis en œuvre par une unité de traitement d'informations d'un équipement de communication de mesure (10, 11, 12, 1001) d'un couple d'équipements de communication, et par une unité de traitement de l'information intégrée à une unité d'analyse (100) de données de supervision, d'un système de communication ferroviaire comprenant l'unité d'analyse (100) de données de supervision, et au moins le couple d'équipements de communication comprenant un équipement de communication statique (10, 11, 12), localisé sur ou à proximité d'une voie ferroviaire, et un équipement de communication mobile (1001), localisé sur un véhicule ferroviaire mobile,
chaque équipement de communication (10, 11, 12, 1001) étant identifié par un identifiant et comprenant une unité de traitement d'informations,
les équipements de communication et l'unité d'analyse de données étant connectés à un réseau de communication,
ledit produit programme d'ordinateur met en œuvre le procédé d'analyse de données selon l'une des revendications 6 et 7.

9. Système de communication ferroviaire comprenant une unité d'analyse (100) de données de supervision, et au moins un couple d'équipements de communication (10, 11, 12, 1001) comprenant un équipement de communication statique (10, 11, 12), localisé sur ou à proximité d'une voie ferroviaire, l'équipement de communication statique étant un point d'accès au réseau de communication ferroviaire, et un équipement de communication mobile (1001), localisé sur un véhicule ferroviaire mobile,
chaque équipement de communication (10, 11, 12, 1001) étant identifié par un identifiant et comprenant une unité de traitement d'informations,
les équipements de communication (10, 11, 12, 1001) et l'unité d'analyse (100) de données étant connectés à un réseau de communication (104),
et un équipement de communication de mesure (10, 11, 12, 1001) dudit au moins un couple d'équipements de communication comprend:
- des moyens de détermination d'un niveau de puissance du signal émis par un équipement de communication mesuré (10, 11, 12, 1001) correspondant à l'autre équipement de communication, distinct de l'équipement de communication de mesure, dudit couple d'équipements de communication, les moyens de détermination étant activés lorsque l'équipement de communication statique et l'équipement de communication mobile dudit couple, sont à portée d'émission,
- des moyens de formation d'une donnée mobile comprenant le niveau de puissance du signal émis, l'identifiant de l'équipement de communication mesuré, et l'identifiant de l'équipement de communication de mesure,
- des moyens de transmission de la donnée mobile à l'unité d'analyse de données de supervision,
et lorsque ledit équipement de communication de mesure est statique et lorsque ledit système de communication ferroviaire comprend au moins un autre équipement de communication statique à portée d'émission de l'équipement de communication de mesure statique, l'équipement de communication de mesure comprend en outre les moyens suivants :
- des moyens de calcul périodique d'une moyenne glissante d'un niveau de puissance du signal émis par ledit au moins un autre équipement de communication statique sur une fenêtre temporelle prédéterminée,
- des moyens de formation d'une donnée statique comprenant la moyenne glissante, l'identifiant dudit au moins un autre équipement de communication statique, et l'identifiant l'équipement de communication de mesure,
- des moyens de transmission de la donnée statique à l'unité d'analyse de données, et l'unité d'analyse (100) comprend une unité de traitement d'informations et :
- des moyens de réception d'une donnée mobile fournie par un équipement de communication de mesure dudit au moins un couple d'équipements de communication, la donnée mobile comprenant, un identifiant dudit équipement de communication de mesure, un identifiant de l'équipement de communication mesuré correspondant à l'autre équipement de communication, distinct de l'équipement de communication de mesure, dudit couple d'équipements de communication, et un niveau de puissance du signal émis par l'équipement de communication mesuré,
- des moyens de détermination d'une variation du niveau de puissance du signal émis par comparaison à un niveau de puissance du signal émis mémorisé dans une donnée de référence comprenant le même identifiant de l'équipement de communication de mesure et le même identifiant de l'équipement de communication mesuré,
- des moyens de génération d'une alerte activés lorsque la variation dépasse un seuil prédéterminé.

## Patentansprüche

1. Verfahren (20) zum Übertragen von Daten eines Bahnkommunikationssystems, das eine Analyseeinheit (100) für Überwachungsdaten und mindestens ein Paar von Kommunikationsvorrichtungen aufweist, das eine statische Kommunikationsvorrichtung (10, 11, 12), die an oder in der Nähe eines Schienenweges (101, 102, 103) liegt, wobei die statische Kommunikationsvorrichtung ein Zugangspunkt zu dem Bahnkommunikationsnetz ist, und eine mobile Kommunikationsvorrichtung (1001), die auf einem fahrbaren Schienenfahrzeug (1000) liegt, aufweist, wobei jede Kommunikationsvorrichtung (10, 11, 12, 1001) durch eine Kennung identifiziert ist und eine Informationsverarbeitungseinheit umfasst, wobei die Kommunikationsvorrichtungen (10, 11, 12, 1001) und die Datenanalyseeinheit (100) mit einem Kommunikationsnetz (104) verbunden sind,
wobei das Verfahren zum Übertragen von Daten von der Informationsverarbeitungseinheit einer Messkommunikationsvorrichtung des mindestens einen Paars von Kommunikationsvorrichtungen ausgeführt wird und die folgenden Schritte umfasst:
- wenn die statische Kommunikationsvorrichtung (11) und die mobile Kommunikationsvorrichtung (1001) des mindestens einen Paars von Kommunikationsverrichtungen in Übertragungsreichweite sind, Bestimmen (21) durch die Messkommunikationsvorrichtung eines Leistungspegels des von einer gemessenen Kommunikationsvorrichtung gesendeten Signals, die der anderen Kommunikationsvorrichtung, unterschiedlich zur Messkommunikationsvorrichtung, des Paars von Kommunikationsvorrichtungen entspricht,
- Bilden (22) eines mobilen Datensatzes, der den Leistungspegel des gesendeten Signals, die Kennung der gemessenen Kommunikationsvorrichtung und die Kennung der Messkommunikationsvorrichtung umfasst,
- Senden (23) des mobilen Datensatzes an die Datenanalyseeinheit,
und wenn die Messkommunikationsvorrichtung statisch ist und wenn das Bahnkommunikationssystem mindestens eine andere statische Kommunikationsvorrichtung in Übertragungsreichweite der statischen Messkommunikationsvorrichtung umfasst, das Verfahren zum Übertragen von Überwachungsdaten, das von der Messkommunikationsvorrichtung ausgeführt wird, außerdem die folgenden Schritte aufweist:
- periodisches Berechnen (24) durch die Messkommunikationsvorrichtung eines gleitenden Mittelwertes eines Leistungspegels des von mindestens einer anderen statischen Kommunikationsvorrichtung gesendeten Signals über ein vorbestimmtes Zeitfenster,
- Bilden (25) eines statischen Datensatzes, der den gleitenden Mittelwert, die Kennung der mindestens einen anderen statischen Kommunikationsvorrichtung und die Kennung der Messkommunikationsvorrichtung umfasst,
- Senden (26) des statischen Datensatzes an die Datenanalyseeinheit.

2. Verfahren (20) zum Übertragen von Daten nach Anspruch 1, bei dem der Schritt des Bestimmens (21) die folgenden Schritte umfasst:
- Speichern (211) von Leistungspegeln des gesendeten Signals sobald die Messkommunikationsvorrichtung in Übertragungsreichweite zu der gemessenen Kommunikationsvorrichtung liegt,
- Bestimmen (212) des Maximums des gespeicherten Leistungspegels des gesendeten Signals.

3. Verfahren (20) zum Übertragen von Daten nach einem beliebigen der Ansprüche 1 und 2, bei dem das Durchführen des Bildens (22) eines mobilen Datensatzes verzögert wird, wobei der Schritt des Bestimmens (21) mindestens zwei Zwischenleistungspegel des gesendeten Signals liefert und der Leistungspegel des für das Bilden des mobilen Datensatzes gesendeten Signals gleich einem Mittelwert (214) dieser mindestens zwei Zwischenleistungspegel ist.

4. Programmprodukt für einen Rechner, Softwarebefehle aufweisend, das, wenn es von einer Informationsverarbeitungseinheit, die in eine statische oder mobile Kommunikationsvorrichtung eines Bahnkommunikationssystems integriert ist, das eine Analyseeinheit für Überwachungsdaten und mindestens ein Paar von Kommunikationsvorrichtungen umfasst, das eine statische Kommunikationsvorrichtung, die an oder in der Nähe eines Schienenweges liegt, wobei die statische Kommunikationsvorrichtung ein Zugangspunkt zu dem Bahnkommunikationsnetz ist, und eine mobile Kommunikationsvorrichtung, die auf einem fahrbaren Schienenfahrzeug liegt, aufweist,
wobei jede statische oder mobile Kommunikationsvorrichtung durch eine Kennung identifiziert ist und die Kommunikationsvorrichtungen und die Datenanalyseeinheit mit einem Kommunikationsnetz verbunden sind, ausgeführt wird,
das Programmprodukt für den Rechner das Verfahren zum Übertragen von Daten nach einem der vorhergehenden Ansprüche ausführt.

5. Messkommunikationsvorrichtung (10, 11, 12, 1001) eines Paars von Kommunikationsvorrichtungen, das eine statische Kommunikationsvorrichtung (10, 11, 12), die an oder in der Nähe eines Schienenweges (101, 102, 103) liegt, wobei die statische Kommunikationsvorrichtung ein Zugangspunkt zu dem Bahnkommunikationsnetz ist, und eine mobile Kommunikationsvorrichtung (1001), die auf einem fahrbaren Schienenfahrzeug (1000) liegt, aufweist, wobei jede Kommunikationsvorrichtung (10, 11, 12, 1001) durch eine Kennung identifiziert ist und eine Informationsverarbeitungseinheit umfasst,
wobei das Paar von Kommunikationsvorrichtungen (10, 11, 12, 1001) zu einem Bahnkommunikationssystem gehört, das gleichfalls eine Analyseeinheit für Überwachungsdaten umfasst,
wobei die Kommunikationsvorrichtungen und die Datenanalyseeinheit mit einem Kommunikationsnetz verbunden sind, und
die Messkommunikationsvorrichtung (10, 11, 12, 1001) umfasst:
- Mittel zum Bestimmen eines Leistungspegels des Signals, das von einer gemessenen Kommunikationsvorrichtung (10, 11, 12, 1001) gesendet wird, die der anderen Kommunikationsvorrichtung, unterschiedlich zur Messkommunikationsvorrichtung, des Paars von Kommunikationsvorrichtungen entspricht, wobei die Mittel zum Bestimmen aktiviert werden, wenn die statische Kommunikationsvorrichtung und die mobile Kommunikationsvorrichtung des Paars in Übertragungsreichweite sind,
- Mittel zum Bilden eines mobilen Datensatzes, der den Leistungspegel des gesendeten Signals, die Kennung der gemessenen Kommunikationsvorrichtung und die Kennung der Messkommunikationsvorrichtung umfasst,
- Mittel zum Senden des mobilen Datensatzes an die Datenanalyseeinheit,
und wenn die Messkommunikationsvorrichtung statisch ist und wenn das Bahnkommunikationssystem mindestens eine andere statische Kommunikationsvorrichtung in Übertragungsreichweite der statischen Messkommunikationsvorrichtung umfasst, die Messkommunikationsvorrichtung außerdem die folgenden Mittel aufweist:
- Mittel zum periodisches Berechnen eines gleitenden Mittelwertes eines Leistungspegels des von mindestens einer anderen statischen Kommunikationsvorrichtung gesendeten Signals über ein vorbestimmtes Zeitfenster,
- Mittel zum Bilden eines statischen Datensatzes, der den gleitenden Mittelwert, die Kennung der mindestens einen anderen statischen Kommunikationsvorrichtung und die Kennung der Messkommunikationsvorrichtung umfasst,
- Mittel zum Senden des statischen Datensatzes an die Datenanalyseeinheit.

6. Verfahren (30) zum Analysieren von Daten eines Bahnkommunikationssystems, das eine eine Informationsverarbeitungseinheit aufweisende Analyseeinheit (100) für Überwachungsdaten und mindestens ein Paar von Kommunikationsvorrichtungen aufweist, das eine statische Kommunikationsvorrichtung (10, 11, 12), die an oder in der Nähe eines Schienenweges (101, 102, 103) liegt, wobei die statische Kommunikationsvorrichtung ein Zugangspunkt zu dem Bahnkommunikationsnetz ist, und eine mobile Kommunikationsvorrichtung (1001), die auf einem fahrbaren Schienenfahrzeug (1000) liegt, umfasst,
wobei jede Kommunikationsvorrichtung (10, 11, 12, 1001) durch eine Kennung identifiziert ist und eine Informationsverarbeitungseinheit umfasst,
wobei die Kommunikationsvorrichtungen (10, 11, 12, 1001) und die Datenanalyseeinheit (100) mit einem Kommunikationsnetz (104) verbunden sind,
wobei das Verfahren (30) zum Analysieren von Überwachungsdaten die folgenden, von der Informationsverarbeitungseinheit einer Messkommunikationsvorrichtung des mindestens einen Paars von Kommunikationsvorrichtungen ausgeführten Schritte umfasst:
- wenn die statische Kommunikationsvorrichtung (11) und die mobile Kommunikationsvorrichtung (1001) des mindestens einen Paars von Kommunikationsverrichtungen in Übertragungsreichweite sind, Bestimmen (21) durch die Messkommunikationsvorrichtung eines Leistungspegels des von einer gemessenen Kommunikationsvorrichtung gesendeten Signals, die der anderen Kommunikationsvorrichtung, unterschiedlich zur Messkommunikationsvorrichtung, des Paars von Kommunikationsvorrichtungen entspricht,
- Bilden (22) eines mobilen Datensatzes, der den Leistungspegel des gesendeten Signals, die Kennung der gemessenen Kommunikationsvorrichtung und die Kennung der Messkommunikationsvorrichtung umfasst,
- Senden (23) des mobilen Datensatzes an die Datenanalyseeinheit,
und wenn die Messkommunikationsvorrichtung statisch ist und wenn das Bahnkommunikationssystem mindestens eine andere statische Kommunikationsvorrichtung in Übertragungsreichweite der statischen Messkommunikationsvorrichtung umfasst, das Verfahren zum Übertragen von Überwachungsdaten, das von der Messkommunikationsvorrichtung ausgeführt wird, außerdem die folgenden Schritte aufweist:
- periodisches Berechnen (24) durch die Messkommunikationsvorrichtung eines gleitenden Mittelwertes eines Leistungspegels des von mindestens einer anderen statischen Kommunikationsvorrichtung gesendeten Signals über ein vorbestimmtes Zeitfenster,
- Bilden (25) eines statischen Datensatzes, der den gleitenden Mittelwert, die Kennung der mindestens einen anderen statischen Kommunikationsvorrichtung und die Kennung der Messkommunikationsvorrichtung umfasst,
- Senden (26) des statischen Datensatzes an die Datenanalyseeinheit
und die folgenden Schritte, die von der Informationsverarbeitungseinheit der Analyseeinheit durchgeführt wird:
- Empfangen (32) eines mobilen Datensatzes, der von einer Messkommunikationsvorrichtung des mindestens einen Paars von Kommunikationsvorrichtungen geliefert wird, wobei der mobile Datensatz eine Kennung der Messkommunikationsvorrichtung, eine Kennung der gemessenen Kommunikationsvorrichtung entsprechend der anderen Kommunikationsvorrichtung, unterschiedlich zu der Messkommunikationsvorrichtung, des Paars von Kommunikationsvorrichtungen und einen Leistungspegel des von der gemessenen Kommunikationsvorrichtung gesendeten Signals umfasst,
- Bestimmen (33) einer Änderung des Leistungspegels des gesendeten Signals durch Vergleich mit einem in einem Referenzdatensatz gespeicherten Leistungspegel des gesendeten Signals, der dieselbe Kennung der Messkommunikationsvorrichtung und dieselbe Kennung der gemessenen Kommunikationsvorrichtung umfasst,
- Erzeugen (34) eines Alarms, wenn die Änderung eine vorbestimmte Schwelle überschreitet.

7. Verfahren (20) zum Analysieren von Daten nach Anspruch 6, bei dem das Verfahren einen Schritt des Initialisierens (31) des Leistungspegels des Signals jedes Referenzdatensatzes auf einen optimalen Pegel, der vor dem Empfangen (32) durchgeführt wird.

8. Programmprodukt für einen Rechner, Softwarebefehle umfassend, das, wenn es von einer Informationsverarbeitungseinheit einer Messkommunikationsvorrichtung (10, 11, 12, 1001) eines Paars von Kommunikationsvorrichtungen und von einer Informationsverarbeitungseinheit, die in einer Analyseeinheit (100) für Überwachungsdaten eines Bahnkommunikationssystems integriert ist, das die Analyseeinheit (100) für Überwachungsdaten und mindestens ein Paar von Kommunikationsvorrichtungen umfasst, das eine statische Kommunikationsvorrichtung (10, 11, 12), die an oder in der Nähe eines Schienenweges liegt, und eine mobile Kommunikationsvorrichtung (1001), die auf einem fahrbaren Schienenfahrzeug liegt, aufweist,
wobei jede Kommunikationsvorrichtung (10, 11, 12, 1001) durch eine Kennung identifiziert ist und eine Informationsverarbeitungseinheit aufweist,
wobei die Kommunikationsvorrichtungen und die Datenanalyseeinheit mit einem Kommunikationsnetz verbunden sind,
das Programmprodukt für den Rechner das Verfahren zum Analysieren von Daten nach einem der Ansprüche 6 und 7 ausführt.

9. Bahnkommunikationssystem, umfassend eine Analyseeinheit (100) für Überwachungsdaten und mindestens ein Paar von Kommunikationsvorrichtungen (10, 11, 12, 1001), das eine statische Kommunikationsvorrichtung (10, 11, 12), die an oder in der Nähe eines Schienenweges liegt, wobei die statische Kommunikationsvorrichtung ein Zugangspunkt zu dem Bahnkommunikationsnetz ist, und eine mobile Kommunikationsvorrichtung (1001), die auf einem fahrbaren Schienenfahrzeug liegt, aufweist,
wobei jede Kommunikationsvorrichtung (10, 11, 12, 1001) durch eine Kennung identifiziert ist und eine Informationsverarbeitungseinheit umfasst,
wobei die Kommunikationsvorrichtungen (10, 11, 12, 1001) und die Datenanalyseeinheit (100) mit einem Kommunikationsnetz (104) verbunden sind, und
eine Messkommunikationsvorrichtung (10, 11, 12, 1001) des mindestens eine Paars von Kommunikationsvorrichtungen umfasst:
- Mittel zum Bestimmen eines Leistungspegels des Signals, das von einer gemessenen Kommunikationsvorrichtung (10, 11, 12, 1001) gesendet wird, die der anderen Kommunikationsvorrichtung, unterschiedlich zur Messkommunikationsvorrichtung, des Paars von Kommunikationsvorrichtungen entspricht, wobei die Mittel zum Bestimmen aktiviert werden, wenn die statische Kommunikationsvorrichtung und die mobile Kommunikationsvorrichtung des Paars in Übertragungsreichweite sind,
- Mittel zum Bilden eines mobilen Datensatzes, der den Leistungspegel des gesendeten Signals, die Kennung der gemessenen Kommunikationsvorrichtung und die Kennung der Messkommunikationsvorrichtung umfasst,
- Mittel zum Senden des mobilen Datensatzes an die Datenanalyseeinheit,
und wenn die Messkommunikationsvorrichtung statisch ist und wenn das Bahnkommunikationssystem mindestens eine andere statische Kommunikationsvorrichtung in Übertragungsreichweite der statischen Messkommunikationsvorrichtung umfasst, die Messkommunikationsvorrichtung außerdem die folgenden Mittel aufweist:
- Mittel zum periodisches Berechnen eines gleitenden Mittelwertes eines Leistungspegels des von mindestens einer anderen statischen Kommunikationsvorrichtung gesendeten Signals über ein vorbestimmtes Zeitfenster,
- Mittel zum Bilden eines statischen Datensatzes, der den gleitenden Mittelwert, die Kennung der mindestens einen anderen statischen Kommunikationsvorrichtung und die Kennung der Messkommunikationsvorrichtung umfasst,
- Mittel zum Senden des statischen Datensatzes an die Datenanalyseeinheit
und die Analyseeinheit (100) eine Informationsverarbeitungseinheit umfasst und:
- Mittel zum Empfangen eines mobilen Datensatzes, der von einer Messkommunikationsvorrichtung des mindestens einen Paars von Kommunikationsvorrichtungen geliefert wird, wobei der mobile Datensatz eine Kennung der Messkommunikationsvorrichtung, eine Kennung der gemessenen Kommunikationsvorrichtung entsprechend der anderen Kommunikationsvorrichtung, unterschiedlich zu der Messkommunikationsvorrichtung, des Paars von Kommunikationsvorrichtungen und einen Leistungspegel des von der gemessenen Kommunikationsvorrichtung gesendeten Signals umfasst,
- Mittel zum Bestimmen einer Änderung des Leistungspegels des gesendeten Signals durch Vergleich mit einem in einem Referenzdatensatz gespeicherten Leistungspegel des gesendeten Signals, der dieselbe Kennung der Messkommunikationsvorrichtung und dieselbe Kennung der gemessenen Kommunikationsvorrichtung aufweist,
- Mittel zum Erzeugen eines Alarms, wenn die Änderung eine vorbestimmte Schwelle überschreitet.

## Claims

1. Method of transmitting (20) data of a railway communication system comprising a supervision data analysis unit (100), and at least one pair of communication devices comprising a static communication device (10, 11, 12), located on or in the vicinity of a railway track (101, 102, 103), the static communication device being an access point to the railway communication network, and a mobile communication device (1001), located on a mobile railway vehicle (1000),
each communication device (10, 11, 12, 1001) being identified by an identifier and comprising a data processing unit,
the communication devices (10, 11, 12, 1001) and the data analysis unit (100) being connected to a communication network (104), the method of transmitting data being implemented by the data processing unit of a measurement communication device of said at least one pair of communication devices, and comprising the following steps:
- when the static communication device (11) and the mobile communication device (1001) of said at least one pair of communication devices are within emission range, determination (21), by the measurement communication device, of a power level of the signal emitted by a measured communication device corresponding to the other communication device, separate from the measurement communication device, of said pair of communication devices,
- formation (22) of mobile data comprising the power level of the emitted signal, the identifier of the measured communication device, and the identifier of the measurement communication device,
- transmission (23) of the mobile data to the data analysis unit,
and when said measurement communication device is static and when said railway communication system comprises at least one other static communication device within emission range of the static measurement communication device, the method of transmitting supervision data, implemented by the measurement communication device comprises in addition the following steps:
- periodic calculation (24), by the measurement communication device, of a sliding average of a power level of the signal emitted by said at least one other static communication device over a predetermined temporal window,
- formation (25) of static data comprising the sliding average, the identifier of said at least one other static communication device, and the identifier of the measurement communication device,
- transmission (26) of the static data to the data analysis unit.

2. Method of transmitting (20) data according to claim 1, in which the determination step (21) comprises the following steps:
- storage (211) of the power levels of the emitted signal when the measurement communication device is located within emission range of the measured communication device,
- determination (212) of the maximum power level of the stored emitted signal.

3. Method of transmitting (20) data according to any of the claims 1 and 2, in which implementation of the formation (22) of mobile data is delayed (213), the determination step (21) supplying at least two intermediate power levels of the emitted signal, the power level of the emitted signal used for the formation of the mobile data being equal to an average (214) of these at least two intermediate power levels.

4. Computer programming product comprising software instructions which, when implemented by a data processing unit integrated in a static or mobile communication device of a railway communication system comprising a supervision data analysis unit, and at least one pair of communication devices comprising a static communication device, located on or in the vicinity of a railway track, the static communication device being an access point to the railway communication network, and a mobile communication device, located on a mobile railway vehicle,
each static or mobile communication device being identified by an identifier, the communication devices and the data analysis unit being connected to a communication network,
said computer programming product implements the data transmission method according to one of the preceding claims.

5. Measurement communication device (10, 11, 12, 1001) of a pair of communication devices comprising a static communication device (10, 11, 12), located on or in the vicinity of a railway track, the static communication device being an access point to the railway communication network, and a mobile communication device (1001), located on a mobile railway vehicle, each communication device (10, 11, 12, 1001) being identified by an identifier and comprising a data processing unit,
the pair of communication devices belonging to a railway communication system likewise comprising a supervision data analysis unit,
the communication devices and the data analysis unit being connected to a communication network,
and said measurement communication device (10, 11, 12, 1001) comprises:
- means of determining a power level of the signal emitted by a measured communication device (10, 11, 12, 1001) corresponding to the other communication device, separate from the measurement communication device, of said pair of communication devices, the determination means being activated when the static communication device and the mobile communication device of said pair are within emission range,
- means of forming mobile data comprising the power level of the emitted signal, the identifier of the measured communication device, and the identifier of the measurement communication device,
- means of transmitting the mobile data to the data analysis unit,
and when said measurement communication device is static and when said railway communication system comprises at least one other static communication device within emission range of the static measurement communication device, the measurement communication device comprises in addition the following means:
- means of periodic calculation of a sliding average of a power level of the signal emitted by said at least one other static communication device over a predetermined temporal window,
- means of forming static data comprising the sliding average, the identifier of said at least one other static communication device, and the identifier of the measurement communication device,
- means of transmitting the static data to the data analysis unit.

6. Method of analysing (30) data from a railway communication system comprising a supervision data analysis unit (100), comprising a data processing unit, and at least one pair of communication devices comprising a static communication device (10, 11, 12) located on or in the vicinity of a railway track, the static communication device being an access point to the railway communication network, and a mobile communication device (1001), located on a mobile railway vehicle,
each communication device being identified by an identifier and comprising a data processing unit,
the communication devices (10, 11, 12, 1001) and the data analysis unit (100) being connected to a communication network (104), the supervision data analysis method (30) comprising the following steps, implemented by the data processing unit of a measurement communication device of said at least one pair of communication devices:
- when the static communication device (11) and the mobile communication device (1001) of said at least one pair of communication devices are within emission range, determination (21), by the measurement communication device, of a power level of the signal emitted by a measured communication device corresponding to the other communication device, separate from the measurement communication device, of said pair of communication devices,
- formation (22) of mobile data comprising the power level of the emitted signal, the identifier of the measured communication device, and the identifier of the measurement communication device,
- transmission (23) of the mobile data to the data analysis unit,
and when said measurement communication device is static and when said railway communication system comprises at least one other static communication device within emission range of the static measurement communication device, the method of transmitting supervision data, implemented by the measurement communication device comprises in addition the following steps:
- periodic calculation (24), by the measurement communication device, of a sliding average of a power level of the signal emitted by said at least one other static communication device over a predetermined temporal window,
- formation (25) of static data comprising the sliding average, the identifier of said at least one other static communication device, and the identifier of the measurement communication device,
- transmission (26) of the static data to the data analysis unit, and the following steps implemented by the data processing unit of the analysis unit:
- receipt (32) of mobile data provided by a measurement communication device of said at least one pair of communication devices, the mobile data comprising an identifier of said measurement communication device, an identifier of the measured communication device corresponding to the other communication device, separate from the measurement communication device, of said pair of communication devices, and a power level of the signal emitted by the measured communication device,
- determination (33) of a variation of the power level of the emitted signal by comparing to a power level of the emitted signal stored in reference data comprising the same identifier of the measurement communication device and the same identifier of the measured communication device,
- generation (34) of an alert when the variation exceeds a predetermined threshold.

7. Method of analysing (20) data according to claim 6, in which the method comprises an initialisation step (31) of the signal power level of each item of data with reference to an optimum level implemented in advance of said receipt (32).

8. Computer programming product comprising software instructions which, when implemented by a data processing unit of a measurement communication device (10, 11, 12, 1001) of a pair of communication devices, and by a data processing unit integrated in a supervision data analysis unit (100), of a railway communication system comprising the supervision data analysis unit (100), and at least the pair of communication devices comprising a static communication device (10, 11, 12), located on or in the vicinity of a railway track, and a mobile communication device (1001), located on a mobile railway vehicle,
each communication device (10, 11, 12, 1001) being identified by an identifier and comprising a data processing unit,
the communication devices and the data analysis unit being connected to a communication network,
said computer programming product implements the data analysis method according to one of the claims 6 and 7.

9. Railway communication system comprising a supervision data analysis unit (100), and at least one pair of communication devices (10, 11, 12, 1001) comprising a static communication device (10, 11, 12), located on or in the vicinity of a railway track, the static communication device being an access point to the railway communication network, and a mobile communication device (1001), located on a mobile railway vehicle, each communication device (10, 11, 12, 1001) being identified by an identifier and comprising a data processing unit,
the communication devices (10, 11, 12, 1001) and the data analysis unit (100) being connected to a communication network (104), and a measurement communication device (10, 11, 12, 1001) of said at least one pair of communication devices comprises:
- means of determining a power level of the signal emitted by a measured communication device (10, 11, 12, 1001) corresponding to the other communication device, separate from the measurement communication device, of said pair of communication devices, the determination means being activated when the static communication device and the mobile communication device of said pair are within emission range,
- means of forming mobile data comprising the power level of the emitted signal, the identifier of the measured communication device, and the identifier of the measurement communication device,
- means of transmitting the mobile data to the supervision data analysis unit,
and when said measurement communication device is static and when said railway communication system comprises at least one other static communication device within emission range of the static measurement communication device, the measurement communication device comprises in addition the following means:
- means of periodic calculation of a sliding average of a power level of the signal emitted by said at least one other static communication device over a predetermined temporal window,
- means of forming static data comprising the sliding average, the identifier of said at least one other static communication device, and the identifier of the measurement communication device,
- means of transmitting the static data to the data analysis unit,
and the analysis unit (100) comprises a data processing unit and:
- means of receiving mobile data provided by a measurement communication device of said at least one pair of communication devices, the mobile data comprising an identifier of said measurement communication device, an identifier of the measured communication device corresponding to the other communication device, separate from the measurement communication device, of said pair of communication devices, and a power level of the signal emitted by the measured communication device,
- means of determining a variation of the power level of the emitted signal by comparing to a power level of the emitted signal stored in reference data comprising the same identifier of the measurement communication device and the same identifier of the measured communication device,
- means of generating an alert activated when the variation exceeds a predetermined threshold.
